(19) Europäisches Patentamt
European Patent Office
Office européen des brevets

(11) **EP 1 953 207 B1**

(12) **EUROPÄISCHE PATENTSCHRIFT**

(45) Veröffentlichungstag und Bekanntmachung des Hinweises auf die Patenterteilung:
**26.08.2009 Patentblatt 2009/35**

(21) Anmeldenummer: 08154760.6

(22) Anmeldetag: **02.02.2006**

(51) Int Cl.:
*C10G 33/04* (2006.01)     *B01D 17/04* (2006.01)
*C08G 83/00* (2006.01)     *C08G 63/20* (2006.01)
*C08G 63/91* (2006.01)     *C08G 64/02* (2006.01)
*C08G 64/42* (2006.01)

(54) **Verwendung von hochverzweigten Polyestern als Demulgatoren zum Spalten von Rohölemulsionen**

Use of hyperbranched polyesters as demulsifiers for cracking crude oil emulsions

Utilisation de polyesters hautement ramifiés comme désémulsifiants pour séparer des émulsions d'huile brute

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **09.02.2005 DE 102005006030**

(43) Veröffentlichungstag der Anmeldung:
**06.08.2008 Patentblatt 2008/32**

(62) Dokumentnummer(n) der früheren Anmeldung(en) nach Art. 76 EPÜ:
**06707971.5 / 1 851 288**

(73) Patentinhaber: **BASF SE**
**67056 Ludwigshafen (DE)**

(72) Erfinder:
• **BRUCHMANN, Bernd**
**67251, Freinsheim (DE)**
• **BÜCHNER, Karl-Heinz**
**68804, Altlußheim (DE)**
• **GUZMANN, Marcus**
**69242, Mühlhausen (DE)**
• **BRODT, Gregor**
**64646, Heppenheim (DE)**
• **FRENZEL, Stefan**
**68161, Mannheim (DE)**

(74) Vertreter: **Isenbruck, Günter**
**Isenbruck Bösl Hörschler Wichmann Huhn LLP**
**Patentanwälte**
**Eastsite One**
**Seckenheimer Landstrasse 4**
**68163 Mannheim (DE)**

(56) Entgegenhaltungen:
EP-A- 0 267 517          WO-A-20/04020503
US-A- 3 009 884          US-A- 4 885 111

**Beschreibung**

Die Erfindung betrifft die Verwendung von hyperverzweigten Polymeren als Demulgatoren zum Spalten von Rohölemulsionen.

Erdöl fällt in der Regel als relativ stabile Wasser-in-Öl-Emulsion an. Diese kann je nach Alter und Lagerstätte bis zu 90 Gew.-% Wasser enthalten. Rohölemulsionen unterscheiden sich in ihrer Zusammensetzung von Lagerstätte zu Lagerstätte. Neben Wasser enthält die Rohölemulsion im Allgemeinen noch 0,1 bis 25 Gew.-% Salze und Feststoffe. Wasser, Salze und Feststoffe müssen entfernt werden, bevor die Rohölemulsion transportiert und als Rohöl in der Raffinerie verarbeitet werden kann. Das Rohöl selbst ist eine heterogene Mischung und enthält vor allem natürliche Emulgatoren, wie Naphthensäuren, heterozyklische Stickstoffverbindungen und oxidierte Kohlenwasserstoffe, des weiteren Erdölkolloide, wie Asphaltene und Harze, anorganische Salze, wie Eisensulfide, Eisenoxide, Tone und Erze, Natriumchlorid und Kaliumchlorid.

Die Rohölemulsionsspaltung wird aus ökonomischen und technischen Gründen durchgeführt, um einerseits den unwirtschaftlichen Transport von Wasser zu vermeiden, Korrosionsprobleme zu verhindern oder zumindest zu minimieren, und um den Energieeinsatz für die Transportpumpen zu reduzieren.

Die Spaltung der Rohölemulsion stellt somit einen wesentlichen Verfahrensschritt bei der Erdölförderung dar. Das im Rohöl enthaltene Wasser, das vor allem durch natürliche Emulgatoren wie Naphthensäuren emulgiert wird, bildet eine stabile Emulsion. Dies geschieht dadurch, dass die Emulgatoren die Grenzflächenspannung zwischen Wasser- und Ölphase herabsetzen und somit die Emulsion stabilisieren. Durch Zugabe von Emulsionsspaltern (Demulgatoren), d. h. grenzflächenaktiven Substanzen, die in die Öl-Wasser-Grenzfläche gehen und dort die natürlichen Emulgatoren verdrängen, kann eine Koaleszenz der emulgierten Wassertröpfchen bewirkt werden, was schließlich zur Phasentrennung führt.

EP-A 0 264 841 beschreibt die Verwendung von linearen Copolymeren aus hydrophoben Acrylsäure- oder Methacrylsäureestern und hydrophilen ethylenisch ungesättigten Monomeren als Erdölemulsionsspalter.

EP-A 0 499 068 beschreibt die Herstellung von Reaktionsprodukten aus vinylischen Monomeren und Alkohol- oder Phenolalkoxylaten und deren Verwendung als Demulgatoren für Rohölemulsionen.

US 5,460750 beschreibt Reaktionsprodukte aus Phenolharzen und Alkylenoxiden als Emulsionsspalter für Rohölemulsionen.

EP-A 0 541 018 beschreibt Emulsionsspalter, hergestellt aus Polyethyleniminen mit einem gewichtmittleren Molekulargewicht von bis zu 35 000 g/mol und Ethylenoxid und Propylenoxid, wobei als zweite wirksame Komponente zusätzlich ein Alkylphenolformaldehydharz eingesetzt wird.

EP-A 0 784 645 beschreibt die Herstellung von Alkoxylaten von Polyaminen, speziell von Polyethyleniminen und Polyvinylaminen, und deren Verwendung als Rohölemulsionsspalter.

EP-A 0 267 517 offenbart verzweigte Polyaminoester als Demulgatoren. Die verzweigten Polyaminoester werden durch Umsetzung von alkoxylierten primären Aminen mit Triolen und Dicarbonsäuren erhalten.

Weiterhin werden dendrimere Polymere als Demulgatoren für Rohöl beschrieben.

US 4,507,466 und US 4,857,599 offenbaren dendrimere Polyamidoamine. US 4,568,737 offenbart dendrimere Polyamidoamine sowie Hybrid-Dendrimere aus Polyamidoaminen, Polyestern und Polyethern, und deren Verwendung als Demulgatoren für Rohöl. Die Herstellung von Dendrimeren ist sehr aufwändig (siehe unten), daher sind diese Produkte sehr teuer und in großtechnischen Anwendungen kaum wirtschaftlich einsetzbar.

DE 103 29 723 beschreibt die Herstellung von alkoxylierten, dendrimeren Polyestern und deren Verwendung als bioabbaubare Emulsionsspalter. Die verwendeten dendrimeren Polyester basieren auf einem mehrfach funktionellen Alkohol als Kernmolekül und einer Carbonsäure, die wenigstens zwei Hydroxylgruppen aufweist, als Aufbaukomponente. Aufbaukomponenten, die sowohl eine Säurefunktion als auch mindestens zwei Hydroxylfunktionen aufweisen, sogenannte $AB_2$-Bausteine, sind vergleichsweise selten und damit teuer. Weiterhin ist der Aufbau von Dendrimeren aufwändig und kostenintensiv (siehe unten). Aufgabe der vorliegenden Erfindung ist es, weitere Demulgatoren zur Spaltung von Rohölemulsionen bereit zu stellen. Diese sollten einfach und kostengünstig herzustellen sein.

Gelöst wird die Aufgabe durch die Verwendung von nicht-dendrimeren, hochfunktionellen, hyperverzweigten Polyestern, die erhältlich sind durch Umsetzung von mindestens einer aliphatischen, cycloaliphatischen, araliphatischen oder aromatischen Dicarbonsäure ($A_2$) oder von Derivaten derselben mit Glycerinmonooleat oder Glycerinmonostearat ($B_2$) und mindestens einem mindestens trifunktionellen Alkohol ($C_x$), ausgewählt aus Glycerin, Diglycerin, Triglycerin, Trimethylolethan, Trimethylolpropan, 1,2,4-Butantriol, Pentaerythrit, tris(Hydroxyethyl)isocyanurat und deren Polyetherolen auf Basis von Ethylenoxid und/oder Propylenoxid, wobei man das Verhältnis der reaktiven Gruppen im Reaktionsgemisch so wählt, dass sich ein molares Verhältnis von OH-Gruppen zu Carboxylgruppen oder deren Derivaten von 5 : 1 bis 1 : 5 einstellt, als Demulgatoren zum Spalten von Rohöl-Emulsionen.

Dendrimere, Arborole, Starburst-Polymere oder hyperverzweigte Polymere sind Bezeichnungen für Polymere, die sich durch eine stark verzweigte Struktur und eine hohe Funktionalität auszeichnen. Dendrimere sind molekular einheitliche Makromoleküle mit einem hoch symmetrischen Aufbau. Dendrimere lassen sich, ausgehend von einem zentralen Molekül, durch kontrollierte, schrittweise Verknüpfung von jeweils zwei oder mehr di- oder mehrfach funktionellen Monomeren mit jedem bereits gebundenen Monomer herstellen. Dabei vervielfacht sich mit jedem Verknüpfungsschritt die Zahl der Monomerendgruppen (und damit der Verknüpfungen) um den Faktor 2 oder höher, und man erhält generationenweise aufgebaute, monodisperse Polymere mit baumartigen Strukturen, im Idealfall kugelförmig, deren Äste jeweils exakt dieselbe Anzahl von Monomereinheiten enthalten. Aufgrund dieser perfekten Struktur sind die Polymereigenschaften vorteilhaft, beispielsweise beobachtet man eine überraschend geringe Viskosität und eine hohe Reaktivität aufgrund der hohen Anzahl funktioneller Gruppen an der Kugeloberfläche. Allerdings wird die Herstellung der monodispersen Dendrimere dadurch verkompliziert, dass bei jedem Verknüpfungsschritt Schutzgruppen eingeführt und wieder entfernt werden müssen und vor Beginn jeder neuen Wachstumsstufe intensive Reinigungsoperationen erforderlich sind, weshalb man Dendrimere üblicherweise nur im Labormaßstab herstellt.

Die speziellen Reaktionsbedingungen, die erforderlich sind, um Dendrimere herzustellen, seien nachfolgend am Beispiel der Herstellung von dendrimeren Polyurethanen erläutert. Um bei der Herstellung der dendrimeren Polyurethane genau definierte Strukturen zu erhalten, ist es notwendig, jeweils mindestens so viele Monomere zuzusetzen, dass jede freie funktionelle Gruppe des Polymeren abreagieren kann. Zu Beginn der Reaktion wird zumeist ein mehrfach funktionelles Molekül, das als Startmolekül oder Initiatorkern bezeichnet wird, vorgelegt, an dessen funktionelle Gruppen je ein mit dieser funktionellen Gruppe reaktives Molekül angelagert wird. Danach erfolgt die Abtrennung der nicht umgesetzten Monomere und eine Reinigung des Zwischenproduktes. Danach wird an jede freie funktionelle Gruppe des Zwischenproduktes wiederum je ein mehrfach funktionelles Monomer angelagert, danach die Abtrennung der überschüssigen Monomeren und eine Reinigung durchgeführt, und so weiter verfahren, bis das gewünschte Molekulargewicht erreicht ist bzw. aus sterischen Gründen eine Anlagerung von weiteren Monomeren nicht mehr möglich ist. Die einzelnen Zwischenstufen werden auch als Generationen bezeichnet, wobei das durch Anlagerung von Monomeren an das Startmolekül entstandene Zwischenprodukt als erste Generation, das nächste Zwischenprodukt als zweite Generation, und so fort, bezeichnet wird. Auf Grund der unterschiedlichen Reaktivität der funktionellen Gruppen der eingesetzten Monomere ist gewährleistet, dass jeweils die reaktivsten funktionellen Gruppen mit den Endgruppen der Dendrimerketten reagieren und die weniger reaktiven funktionellen Gruppen der Monomere die funktionellen Endgruppen der nächsten Generation der dendrimeren Polyurethane bilden.

So kann die Herstellung der dendrimeren Polyurethane erfolgen, indem man 1 Mol eines Diisocyanates mit zwei Mol eines Aminodiols zur ersten Generation des dendrimeren Polyurethans umsetzt. Die Temperatur bei der Umsetzung sollte dabei möglichst niedrig, vorzugsweise im Bereich zwischen -10 bis 30 °C, liegen. In diesem Temperaturbereich erfolgt eine praktisch vollständige Unterdrückung der Urethanbildungsreaktion, und die NCO-Gruppen des Isocyanates reagieren ausschließlich mit der Aminogruppe des Aminodiols. Im nächsten Reaktionsschritt reagieren die freien Hydroxylgruppen des addierten Aminodiols bei erhöhter Temperatur, vorzugsweise im Bereich zwischen 30 und 80 °C, selektiv mit der reaktiveren NCO-Gruppe des zugesetzten Isocyanats. Das resultierende dendrimere Polyurethan der zweiten Generation besitzt als funktionelle Endgruppen die reaktionsträgeren NCO-Gruppen des zugesetzten Isocyanats. Diese werden wiederum, wie bei der Herstellung der ersten Generation des dendrimeren Polyurethans, bei niedriger Temperatur mit dem Aminodiol umgesetzt, und so fort. Die Umsetzung kann in Substanz oder in Lösungsmitteln ohne oder in Anwesenheit eines Urethanbildungskatalysators durchgeführt werden. Zwischen den Reaktionsstufen kann, soweit erforderlich, eine Abtrennung überschüssiger Monomere und/oder ein Reinigungsschritt erfolgen.

Auf diese Weise können dendrimere Polyurethane erzeugt werden, die bei jeder Generation ihre Funktionalität verdoppeln.

In analoger Weise können auch drei- und höherfunktionelle Isocyanate und Verbindungen mit vier oder mehr mit Isocyanaten reaktiven funktionellen Gruppen umgesetzt werden.

Der beschriebene generationenweise Aufbau ist erforderlich, um vollständig regelmäßig aufgebaute, dendrimere Strukturen zu erzeugen.

Im Gegensatz dazu sind hyperverzweigte Polymere sowohl molekular wie strukturell uneinheitlich. Sie werden durch einen nicht-generationenweisen Aufbau erhalten. Es ist daher auch nicht notwendig, Zwischenprodukte zu isolieren und zu reinigen. Hyperverzweigte Polymere können durch einfaches Vermischen der zum Aufbau erforderlichen Komponenten und deren Reaktion in einer sogenannten Ein-Topf-Reaktion erhalten werden. Hyperverzweigte Polymere können dendrimere Substrukturen aufweisen. Daneben weisen sie aber auch lineare Polymerketten und ungleiche Polymeräste auf. Zur Synthese der hyperverzweigten Polymere eignen sich insbesondere so genannte $AB_x$-Monomere. Diese weisen zwei verschiedene funktionelle Gruppen A und B in einem Molekül auf, die unter Bildung einer Verknüpfung intermolekular miteinander reagieren können. Die funktionelle Gruppe A ist dabei nur einmal pro Molekül enthalten und die funktionelle Gruppe B zweifach oder mehrfach. Durch die Reaktion der besagten $AB_x$-Monomere miteinander entstehen unvernetzte Polymere mit regelmäßig angeordneten Verzweigungsstellen. Die Polymere weisen an den Kettenenden fast ausschließlich B-Gruppen auf.

Weiterhin lassen sich hyperverzweigte Polymere über die $A_x+B_y$- Syntheseroute herstellen. Darin stehen $A_x$ und $B_y$ für zwei unterschiedliche Monomere mit den funktionellen Gruppen A und B und die Indices x und y für die Anzahl der funktionellen Gruppen pro Monomer. Bei der $A_x + B_y$-Synthese, dargestellt hier am Beispiel einer $A_2 + B_3$-Synthese,

setzt man ein difunktionelles Monomer $A_2$ mit einem trifunktionellen Monomer $B_3$ um. Dabei entsteht zunächst ein 1:1-Addukt aus A und B mit im Mittel einer funktionellen Gruppe A und zwei funktionellen Gruppen B, das dann ebenfalls zu einem hyperverzweigten Polymer reagieren kann. Auch die so erhaltenen hyperverzweigten Polymere weisen überwiegend B-Gruppen als Endgruppen auf.

Das Merkmal "hyperverzweigt" im Zusammenhang mit den Polymeren bedeutet im Sinne der Erfindung, dass der Verzweigungsgrad DB (degree of branching) der betreffenden Stoffe, der definiert ist als

$$DB\,(\%) = \frac{T+Z}{T+Z+L} \times 100,$$

wobei T die mittlere Anzahl der terminal gebundenen Monomereinheiten, Z die mittlere Anzahl der Verzweigungen bildenden Monomereinheiten und L die mittlere Anzahl der linear gebundenen Monomereinheiten in den Makromolekülen der jeweiligen Stoffe bedeuten, 10 bis 95 %, bevorzugt 25 - 90 % und besonders bevorzugt 30 bis 80 % beträgt.

Durch den so definierten Verzweigungsgrad unterscheiden sich die erfindungsgemäß verwendeten nicht-dendrimeren hyperverzweigten Polymere von den dendrimeren Polymeren. "Dendrimer" sind im Zusammenhang mit der vorliegenden Erfindung die Polymere dann, wenn ihr Verzweigungsgrad DB = 99,9 - 100 % beträgt. Damit weist ein Dendrimer die maximal mögliche Anzahl an Verzweigungsstellen auf, welche nur durch einen hochsymmetrischen Aufbau erreicht werden kann. Zur Definition des "Degree of Branching" siehe auch H. Frey et al., Acta Polym. 1997, 48, 30.

Unter hyperverzweigten Polymeren werden im Rahmen dieser Erfindung im Wesentlichen unvernetzte Makromoleküle verstanden, die sowohl strukturell als auch molekular uneinheitlich sind. Sie können, ausgehend von einem Zentralmolekül, analog zu Dendrimeren, jedoch mit uneinheitlicher Kettenlänge der Äste aufgebaut sein. Sie können aber auch linear mit funktionellen seitenständigen Ästen aufgebaut sein oder aber, als Kombination der beiden Extreme, lineare und verzweigte Molekülteile aufweisen. Zur Definition von dendrimeren und hyperverzweigten Polymeren siehe auch P.J. Flory, J. Am. Chem. Soc. 1952, 74, 2718 und H. Frey et al., Chem. Eur. J. 2000, 6, No. 14, 2499.

Erfindungsgemäß werden hyperverzweigte Polyester, also nicht-dendrimere Polymere im Sinne der obigen Definition, d.h. molekular und strukturell uneinheitlichen Polymere als Demulgatoren verwendet.

Funktionelle Gruppen aufweisende hyperverzweigte Polymere können in prinzipiell bekannter Art und Weise unter Verwendung von $AB_x$-, bevorzugt $AB_2$- oder $AB_3$-Monomeren synthetisiert werden. Die $AB_x$-Monomere können dabei einerseits vollständig in Form von Verzweigungen in das hyperverzweigte Polymer eingebaut werden, sie können als terminale Gruppen eingebaut werden, also noch x freie B-Gruppen aufweisen, und sie können als lineare Gruppen mit (x-1) freien B-Gruppen eingebaut sein. Die erhaltenen hyperverzweigten Polymere weisen je nach dem Polymerisationsgrad eine mehr oder weniger große Anzahl von B-Gruppen, entweder terminal oder als Seitengruppen auf. Weitere Angaben zu hyperverzweigten Polymeren und deren Synthese sind beispielsweise in J.M.S. - Rev. Macromol. Chem. Phys., C37(3), 555 - 579 (1997) und der dort zitierten Literatur zu finden.

## Hyperverzweigte Polyester

Erfindungsgemäße Demulgatoren sind erhältlich durch Umsetzung mindestens einer aliphatischen, cycloaliphatischen, araliphatischen oder aromatischen Dicarbonsäure ($A_2$) oder von Derivaten derselben mit Glycerinmonooleat und Glycerinmonostearat ($B_2$) und mindestens einem x-wertigen aliphatischen, cycloaliphatischen, araliphatischen oder aromatischen Alkohol ($C_x$), der mehr als zwei OH-Gruppen aufweist, wobei x eine Zahl größer 2, vorzugsweise 3 bis 8, besonders bevorzugt 3 bis 6, ganz besonders bevorzugt 3 bis 4 und insbesondere 3 ist,

wobei man das Verhältnis der reaktiven Gruppen im Reaktionsgemisch so wählt, dass sich ein molares Verhältnis von OH-Gruppen zu Carboxylgruppen oder deren Derivaten von 5:1 bis 1:5, vorzugsweise von 4:1 bis 1:4, besonders bevorzugt von 3:1 bis 1:3 und ganz besonders bevorzugt von 2:1 bis 1:2 einstellt.

Unter hyperverzweigten Polyestern werden im Rahmen dieser Erfindung unvernetzte Polyester mit Hydroxyl- und Carboxylgruppen verstanden, die sowohl strukturell als auch molekular uneinheitlich sind. Unvernetzt im Rahmen dieser Schrift bedeutet, dass ein Vernetzungsgrad von weniger als 15 Gew.%, bevorzugt von weniger als 10 Gew.-%, bestimmt über den unlöslichen Anteil des Polymeren, vorhanden ist. Der unlösliche Anteil des Polymeren wurde bestimmt durch vierstündige Extraktion mit dem gleichen Lösungsmittel, wie es für die Gelpermeationschromatographie verwendet wird, also Tetrahydrofuran oder Hexafluorisopropanol, je nachdem, in welchem Lösungsmittel das Polymer besser löslich ist, in einer Soxhlet-Apparatur und nach Trocknung des Rückstandes bis zur Gewichtskonstanz Wägung des verbliebenen Rückstandes.

Zu den Dicarbonsäuren (A$_2$) gehören beispielsweise aliphatische Dicarbonsäuren, wie Oxalsäure, Malonsäure, Bernsteinsäure, Glutarsäure, Adipinsäure, Pimelinsäure, Korksäure, Azelainsäure, Sebacinsäure, Undecan-$\alpha,\omega$-dicarbonsäure, Dodecan-$\alpha,\omega$-dicarbonsäure, cis- und trans-Cyclohexan-1,2-dicarbonsäure, cis- und trans-Cyclohexan-1,3-dicarbonsäure, cis- und trans-Cyclohexan-1,4-dicarbonsäure, cis- und trans-Cyclopentan-1,2-dicarbonsäure, cis- und trans-Cyclopentan-1,3-dicarbonsäure. Weiterhin können auch aromatische Dicarbonsäuren, wie zum Beispiel Phthalsäure, Isophthalsäure oder Terephthalsäure verwendet werden. Auch ungesättigte Dicarbonsäuren, wie Maleinsäure oder Fumarsäure, sind einsetzbar.

Die genannten Dicarbonsäuren können auch substituiert sein mit einem oder mehreren Resten, ausgewählt aus C$_1$-C$_{10}$-Alkylgruppen, C$_3$-C$_{12}$-Cycloalkylgruppen, Alkylengruppen wie Methylen oder Ethyliden oder C$_6$-C$_{14}$-Arylgruppen. Als beispielhafte Vertreter für substituierte Dicarbonsäuren seien genannt: 2-Methylmalonsäure, 2-Ethylmalonsäure, 2-Phenylmalonsäure, 2-Methylbernsteinsäure, 2-Ethylbernsteinsäure, 2-Phenylbernsteinsäure, Itaconsäure, 3,3-Dimethylglutarsäure.

Weiterhin lassen sich Gemische von zwei oder mehreren der vorgenannten Dicarbonsäuren einsetzen.

Die Dicarbonsäuren lassen sich entweder als solche oder in Form von ihren Derivaten einsetzen.

C$_1$-C$_4$-Alkyl bedeutet im Einzelnen Methyl, Ethyl, *iso*-Propyl, n-Propyl, n-Butyl, *iso*Butyl, *sek*-Butyl und *tert*-Butyl, bevorzugt Methyl, Ethyl und n-Butyl, besonders bevorzugt Methyl und Ethyl und ganz besonders bevorzugt Methyl.

Es ist auch möglich, ein Gemisch aus einer Dicarbonsäure und einem oder mehreren ihrer Derivate einzusetzen. Gleichfalls ist es möglich, ein Gemisch mehrerer verschiedener Derivate von einer oder mehreren Dicarbonsäuren einzusetzen.

Besonders bevorzugt setzt man Malonsäure, Bernsteinsäure, Glutarsäure, Adipinsäure, 1,2-, 1,3- oder 1,4-Cyclohexandicarbonsäure (Hexahydrophthalsäuren), Phthalsäure, Isophthalsäure, Terephthalsäure oder deren Mono- oder Dialkylester ein.

Derivate sind die betreffenden Anhydride in monomerer oder auch polymerer Form, Mono- oder Dialkylester, bevorzugt Mono- oder Di-C$_1$-C$_4$-alkylester, besonders bevorzugt Mono- oder Dimethylester oder die entsprechenden Mono- oder Diethylester, ferner Mono- und Divinylester sowie gemischte Ester, bevorzugt gemischte Ester mit unterschiedlichen C$_1$-C$_4$-Alkylkomponenten, besonders bevorzugt gemischte Methylethylester.

Mindestens trifunktionelle Alkohole (C$_x$) umfassen Glycerin, Trimethylolmethan, Trimethylolethan, Trimethylolpropan, 1,2,4-Butantriol, Tris(hydroxymethyl)amin, Tris(hydroxyethyl)amin, Tris(hydroxypropyl)amin, Pentaerythrit, Diglycerin, Triglycerin oder höhere Kondensationsprodukte des Glycerins, Di(trimethylolpropan), Di(pentaerythrit), Trishydroxymethylisocyanurat, Tris(hydroxyethyl)isocyanurat (THEIC), Tris(hydroxypropyl)isocyanurat, Inositole oder Zukker, wie zum Beispiel Glucose, Fructose oder Sucrose, Zuckeralkohole wie z.B. Sorbit, Mannit, Threit, Erythrit, Adonit (Ribit), Arabit (Lyxit), Xylit, Dulcit (Galactit), Maltit, Isomalt, tri- oder höherfunktionelle Polyetherole auf Basis tri- oder höherfunktioneller Alkohole und Ethylenoxid, Propylenoxid und/oder Butylenoxid.

Mindestens trifunktionelle Alkohole (C$_x$) sind Glycerin, Diglycerin, Triglycerin, Trimethylolethan, Trimethylolpropan, 1,2,4-Butantriol, Pentaerythrit, Tris(hydroxyethyl)isocyanurat sowie deren Polyetherole auf Basis von Ethylenoxid und/oder Propylenoxid.

Die Umsetzung kann in Gegenwart oder Abwesenheit eines Lösemittels durchgeführt werden. Als Lösemittel geeignet sind beispielsweise Kohlenwasserstoffe wie Paraffine, Aromaten, Ether und Ketone. Vorzugsweise wird die Reaktion frei von Lösungsmittel durchgeführt. Die Umsetzung kann in Gegenwart eines Wasser entziehenden Mittels als Additiv erfolgen, das man zu Beginn der Reaktion zusetzt. Geeignet sind beispielsweise Molekularsiebe, insbesondere Molekularsieb 4Å, MgSO$_4$ und Na$_2$SO$_4$. Man kann auch während der Reaktion gebildetes Wasser bzw. Alkohol abdestillieren und beispielsweise einen Wasserabscheider einsetzen, bei dem das Wasser mit Hilfe eines Schleppmittels entfernt wird.

Man kann die Umsetzung in Abwesenheit von Katalysatoren durchführen. Vorzugsweise arbeitet man jedoch in Gegenwart von mindestens einem Katalysator. Dies sind bevorzugt saure anorganische, metallorganische oder organische Katalysatoren oder Gemische aus mehreren sauren anorganischen, metallorganischen oder organischen Katalysatoren.

Als saure anorganische Katalysatoren sind beispielsweise Schwefelsäure, Sulfate und Hydrogensulfate, wie Natriumhydrogensulfat, Phosphorsäure, Phosphonsäure, hypophosphorige Säure, Aluminiumsulfathydrat, Alaun, saures Kieselgel (pH ≤ 6, insbesondere ≤ 5) und saures Aluminiumoxid zu nennen. Weiterhin sind beispielsweise A-lumiumverbindungen der allgemeinen Formel Al(OR$^1$)$_3$ und Titanate bevorzugt. Bevorzugte saure metallorganische Katalysatoren sind weiterhin Dialkylzinnoxide oder Dialkylzinnester. Bevorzugte saure organische Katalysatoren sind saure organische Verbindungen mit beispielsweise Phosphatgruppen, Sulfonsäuregruppen, Sulfatgruppen oder Phosphonsäuregruppen. Man kann auch saure Ionentauscher als saure organische Katalysatoren einsetzen.

Die Umsetzung wird bei Temperaturen von 60 bis 250°C durchgeführt.

Die erfindungsgemäß verwendeten hyperverzweigten Polyester haben ein Molekulargewicht M$_w$ von mindestens 500, bevorzugt mindestens 600 und besonders bevorzugt 1000 g/mol. Die obere Grenze des Molekulargewichts M$_w$ ist bevorzugt 500.000 g/mol, besonders bevorzugt beträgt es nicht mehr als 200.000 und ganz besonders bevorzugt nicht mehr als 100.000 g/mol.

Die Angaben zur Polydispersität sowie zum zahlenmittleren und gewichtsmittleren Molekulargewicht $M_n$ und $M_w$ beziehen sich hier auf gelpermeationschromatographische Messungen, wobei Polymethylmethacrylat als Standard und Tetrahydrofuran, Dimethylformamid, Dimethylacetamid oder Hexafluorisopropanol als Elutionsmittel verwendet wurden. Die Methode ist im Analytiker Taschenbuch Bd. 4, Seiten 433 bis 442, Berlin 1984 beschrieben.

Die Polydispersität der erfindungsgemäß verwendeten Polyester beträgt im Allgemeinen 1,2 bis 50, bevorzugt 1,4 bis 40, besonders bevorzugt 1,5 bis 30 und ganz besonders bevorzugt 2 bis 30.

Zur Spaltung der Rohölemulsionen werden die erfindungsgemäß verwendeten hyperverzweigten Polymere den Wasser-in-Öl- oder Öl-in-Wasser-Emulsionen vorzugsweise in gelöster Form zugesetzt. Dabei haben sich Polymerkonzentrationen in der Lösung von 10-90 Gew.-% bewährt. Als Lösemittel bevorzugt verwendet werden unter anderem Wasser, Alkohole wie Methanol, Ethanol, Propanol, Isopropanol, Butanol, Ether wie Tetrahydrofuran oder Dioxan, paraffinische Lösemittel wie Hexan, Cyclohexan, Heptan, Octan, Isooctan oder Leichtbenzinfraktionen, oder aromatische Lösemittel wie Toluol oder Xylol.

Bei der Emulsionsspaltung werden die Polymerlösungen dem Rohölen bevorzugt an den Sonden, das heißt im Ölfeld, zugesetzt. Die Spaltung verläuft bereits bei der Temperatur der frisch geförderten Rohölemulsion mit einer solchen Geschwindigkeit ab, dass die Emulsion bereits auf dem Weg zu der Aufbereitungsanlage gespalten werden kann. Diese gebrochene Emulsion wird dann in einem gegebenenfalls beheizten Abscheider und eventuell unter Zuhilfenahme eines elektrischen Feldes in Reinöl und Wasser beziehungsweise Salzwasser getrennt.

Die Konzentration des oder der erfindungsgemäß verwendeten Polymere, bezogen auf den Ölgehalt der Rohölemulsion, beträgt dabei im Allgemeinen 0,1 ppm bis 5 Gew.-%, vorzugsweise 1 ppm bis 3 Gew.-%, besonders bevorzugt 2 ppm bis 1 Gew.-% und speziell 5 ppm bis 0,5 Gew.-%.

Der Zusatz der Emulsionsspalter erfolgt dabei in der Regel bei 10 - 130°C, bevorzugt bei 40 - 90°C.

Die erfindungsgemäß verwendeten hyperverzweigten Polymere können für Wasser-in-Öl- oder Öl-in-Wasser-Emulsionen mit im Allgemeinen 0,1 bis 99 Gew.-% Wasser beziehungsweise Salzwasser verwendet werden. Als Öle, die auf diese Weise entwässert werden können, kommen Rohölemulsionen beliebiger Herkunft in Betracht.

Die erfindungsgemäßen Polymere können selbstverständlich auch im Mischung mit anderen Röhol-Demulgatoren eingesetzt werden.

Die Erfindung wird anhand der folgenden Beispiele näher erläutert.

**Beispiele**

Beispiel 1

Herstellung eines hyperverzweigten Polyesters

87,7 g Adipinsäure, 155,0 g eines ethoxyliertes Glycerin (Glycerin + 5 EO) und 89,1 g Glycerinmonooleat, welches mit 3000 ppm 4-Hydroxy-2,2,6,6-tetramethylpiperidin-N-oxid stabilisiert war, wurden in einem 500 mL-Glaskolben vorgelegt, der mit Rührer, Innenthermometer, Gaseinleitungsrohr, Rückflusskühler und Vakuumanschluss mit Kühlfalle ausgerüstet war. Man gab 7,0 g des Enzyms Novozym® 435 (Fa. Novozymes) zu und erhitzte das Gemisch mit Hilfe eines Ölbads auf eine Innentemperatur von 70°C. Man legte einen verminderten Druck von 80 mbar an, um bei der Reaktion gebildetes Wasser abzutrennen. Die Reaktionsmischung wurde 40 Stunden bei der genannten Temperatur und den genannten Druck gehalten. Nach dem Abkühlen erhielt man den hyperverzweigten Polyester als klare, viskose Flüssigkeit mit einer Säurezahl von 8 mg KOH/g. Das Produkt wurde in Aceton gelöst, filtriert und das Filtrat am Rotationsverdampfer bei 80 mbar und 40°C vom Lösemittel befreit. Das Molekulargewicht des Polymeren wurde per Gelpermeationschromatographie gegen PMMA-Standard bestimmt zu Mn = 2900 g/mol und Mw = 20300 g/mol.

Beispiel 2

Herstellung eines hyperverzweigten Polyesters

700 g Adipinsäure, 374,9 g Glycerin und 257,6 g Glycerinmonostearat wurden in einem 2L-Glaskolben vorgelegt, der mit Rührer, Innenthermometer, Gaseinleitungsrohr und Rückflusskühler mit Vakuumanschluss und Kühlfalle ausgerüstet war. Man erhitzte das Gemisch mit Hilfe eines Ölbads auf eine Innentemperatur von 150°C, gab 0,66 g Dibutylzinndilaurat zu und destillierte entstehendes Reaktionswasser ab, wobei die Innentemperatur langsam bis auf 180°C gesteigert wurde. Nachdem 120 g Wasser abdestilliert war, legte man einen verminderten Druck von 80 mbar an und destillierte nochmals 39 g Wasser ab. Nach dem Abkühlen erhielt man den hyperverzweigten Polyester als viskose Flüssigkeit. Das Molekulargewicht des Polymeren wurde per Gelpermeationschromatographie gegen PMMA-Standard bestimmt zu Mn = 2100 g/mol und Mw = 32000 g/mol.

Beispiel 3

350 g Adipinsäure, 187,5 g Glycerin und 97,2 g Glycerinmonostearat wurden in einem 1 L-Glaskolben vorgelegt, der mit Rührer, Innenthermometer, Gaseinleitungsrohr und Rückflusskühler mit Vakuumanschluss und Kühlfalle ausgerüstet war. Man erhitzte das Gemisch mit Hilfe eines Ölbads auf eine Innentemperatur von 150°C, gab 0,4 g Dibutylzinndilaurat zu und destillierte entstehendes Reaktionswasser ab, wobei die Innentemperatur langsam bis auf 180°C gesteigert wurde. Nachdem 56 g Wasser abdestilliert war, legte man einen verminderten Druck von 80 mbar an und destillierte nochmals 5 g Wasser ab. Nach dem Abkühlen erhielt man den hyperverzweigten Polyester als viskose Flüssigkeit. Das Molekulargewicht des Polymeren wurde per Gelpermeationschromatographie gegen PMMA-Standard bestimmt zu Mn = 800 g/mol und Mw = 5900 g/mol.

Beispiel 4

Prüfung der Eignung der hyperverzweigten Polyester als Demulgator durch Messung der Wasserabspaltung aus einer Rohölemulsion

5 g des zu prüfenden hyperverzweigten Polyesters wurde in einen 100 ml Messkolben eingewogen, dieser mit Xylol / Isopropanol-Gemisch 3:1 (bez. Auf Volumen) bis zur Ringmarke aufgefüllt und das hyperverzweigte Polymer durch Schütteln darin gelöst.

Eine Rohölemulsion der Wintershall AG, Emlichheim, Sonde 87, mit einem Wassergehalt von 55 Vol.-% wurde für ca. 2 h im Wasserbad in einem nicht fest verschlossenen Behälter auf eine Temperatur von 52°C erwärmt.

Die Rohölemulsion wurde ca. 30 sec durch Schütteln homogenisiert und jeweils 100 ml der Ölemulsion wurden in 100 ml-Schüttelzylinder gefüllt. Die mit Öl gefüllten Schüttelrylinder wurden in das Wasserbad eingesetzt.

Mit einer Eppendorf - Pipette wurden jeweils 50 μl der 5 gew.-%igen Lösung des zu prüfenden Polymers in einen Schüttelzylinder mit Rohölemulsion dosiert und der Zylinder mit dem Glasstopfen verschlossen. Danach wurde der Schüttelzylinder aus dem Wasserbad heraus genommen, 60 mal geschüttelt und entspannt. Der Schüttelzylinder wurde nun wieder in das Wasserbad gestellt und der Kurzzeitmesser gestartet. Das Volumen des sich nun abscheidenden Wassers wurde nach 5, 10, 15, 30, 60, 120 und 240 min abgelesen. Die Ergebnisse sind in Tabelle 2 wiedergegeben.

Tabelle 2

| Polymer aus Beispiel | Wasserabspaltung in ml | | | | | | |
|---|---|---|---|---|---|---|---|
| | 5 min | 10 min | 15 min | 30 min | 60 min | 120 min | 240 min |
| 1 | 0 | 0 | 2 | 5 | 13 | 47 | 55 |
| 2 | 1 | 2 | 4 | 8 | 16 | 40 | 54 |
| 3 | 0 | 1 | 4 | 8 | 14 | 34 | 48 |

**Patentansprüche**

1. Verwendung von nicht-dendrimeren, hochfunktionellen, hyperverzweigten Polyestern, die erhältlich sind durch Umsetzung von mindestens einer aliphatischen, cycloaliphatischen, araliphatischen oder aromatischen Dicarbonsäure ($A_2$) oder von Derivaten derselben mit Glycerinmonooleat oder Glycerinmonostearat ($B_2$) und mindestens einem mindestens trifunktionellen Alkohol ($C_x$), ausgewählt aus Glycerin, Diglycerin, Triglycerin, Trimethylolethan, Trimethylolpropan, 1,2,4-Butantriol, Pentaerythrit, tris(Hydroxyethyl)isocyanurat und deren Polyetherolen auf Basis von Ethylenoxid und/oder Propylenoxid, wobei man das Verhältnis der reaktiven Gruppen im Reaktionsgemisch so wählt, dass sich ein molares Verhältnis von OH-Gruppen zu Carboxylgruppen oder deren Derivaten von 5 : 1 bis 1 : 5 einstellt, als Demulgatoren zum Spalten von Rohöl-Emulsionen.

2. Verwendung nach Anspruch 1, **dadurch gekennzeichnet, dass** der Verzweigungsgrad der hyperverzweigten Polyester von 30 bis 80 % beträgt.

3. Verwendung nach einem der Ansprüche 1 oder 2, **dadurch gekennzeichnet, dass** das gewichtsmittlere Molekulargewicht der hyperverzweigten Polyester 1000 bis 500 000 g/mol beträgt.

**Claims**

1.  The use of non-dendrimeric, highly functional, hyperbranched polymers which are obtainable by reacting at least one aliphatic, cycloaliphatic, araliphatic or aromatic dicarboxylic acid ($A_2$) or derivatives thereof with glyceryl monooleate or glyceryl monostearate ($B_2$) and at least one at least trifunctional alcohol ($C_x$) selected from glycerol, diglycerol, triglycerol, trimethylolethane, trimethylolpropane, 1,2,4-butanetriol, pentaerythritol, tris(hydroxyethyl) isocyanurate and polyetherols thereof based on ethylene oxide and/or propylene oxide, the ratio of the reactive groups in the reaction mixture being chosen so that a molar ratio of OH groups to carboxyl groups or derivatives thereof of from 5:1 to 1:5 results, as demulsifiers for breaking crude oil emulsions.

2.  The use according to claim 1, wherein the degree of branching of the hyperbranched polyesters is from 30 to 80%.

3.  The use according to either of claims 1 and 2, wherein the weight average molecular weight of the hyperbranched polyesters is from 1000 to 500 000 g/mol.


**Revendications**

1.  Utilisation de polyesters non dendrimères, hautement fonctionnels, hyperramifiés, qui peuvent être obtenus par transformation d'au moins un acide dicarboxylique aliphatique, cycloaliphatique, araliphatique ou aromatique ($A_2$) ou de dérivés de ceux-ci avec du monooléate de glycérol ou du monostéarate de glycérol ($B_2$) et au moins un alcool trifonctionnel ($C_x$), choisi parmi le glycérol, le diglycérol, le triglycérol, le triméthyloléthane, le triméthylolpropane, le 1,2,4-butanetriol, le pentaérythritol, le tris(hydroxyéthyl)isocyanurate et leurs polyéthérols à base d'oxyde d'éthylène et/ou d'oxyde de propylène, le rapport des groupes réactifs dans le mélange réactionnel étant choisi de manière telle qu'il se règle un rapport molaire de groupe OH aux groupes carboxyle ou leurs dérivés de 5:1 à 1:5 comme désémulsifiants pour la séparation d'émulsions de pétrole brut.

2.  Utilisation selon la revendication 1, **caractérisée en ce que** le degré de ramification des polyesters hyperramifiés est de 30 à 80%.

3.  Utilisation selon l'une quelconque des revendications 1 ou 2, **caractérisée en ce que** le poids moléculaire pondéral moyen des polyesters hyperramifiés est de 1000 à 500 000 g/mole.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0264841 A
- EP 0499068 A
- US 5460750 A
- EP 0541018 A
- EP 0784645 A
- EP 0267517 A
- US 4507466 A
- US 4857599 A
- US 4568737 A
- DE 10329723

**In der Beschreibung aufgeführte Nicht-Patentliteratur**

- **H. Frey et al.** *Acta Polym.,* 1997, vol. 48, 30
- **P.J. Flory.** *J. Am. Chem. Soc.,* 1952, vol. 74, 2718
- **H. Frey et al.** *Chem. Eur. J.,* 2000, vol. 6 (14), 2499
- *J.M.S. - Rev. Macromol. Chem. Phys.,* 1997, vol. C37 (3), 555-579